# EUROPEAN PATENT SPECIFICATION

(11) **EP 0 309 137 B1**
(45) Date of publication and mention of the grant of the patent: **13.01.1993**
(21) Application number: 88308445.1
(22) Date of filing: 13.09.1988
(51) Int. Cl.: F16K 15/02

(54) **Cartridge bypass valve**
Patronenartiges Umleitungsventil
Vanne de dérivation à cartouche

(30) Priority: 17.09.1987 US 98095
(43) Date of publication of application: 29.03.1989
(73) Proprietor: PARKER HANNIFIN CORPORATION, Cleveland Ohio 44112 (US)
(72) Inventor: Miller, Daniel W., Luckey Ohio 43443 (US); Cella, Albert F., Sylvania Ohio 43560 (US)
(74) Representative: Purvis, William Michael Cameron

(56) References cited:
- FR-A- 2 559 872
- US-A- 1 443 675
- US-A- 1 602 372
- US-A- 3 913 615

## Description

This invention relates to check valves and more particularly to a bypass valve for a fluid filter as defined in the preamble of claim 1 and known from FR-A-2 559 872. From that FR-A document is also known a poppet valve assembly comprising:
a plastics valve body having an annular valve head and a valve seat and an integral spring housing extending rearwardly of the valve head, the spring housing comprising poppet guides terminating in an end wall; a valve poppet having guide means thereon slidably to support the valve poppet on the poppet guides forming a guide portion for restricted movement toward and away from the valve seat; and a spring disposed between the valve poppet and the end wall to bias the valve poppet toward the valve seat.

In Patent Specification US-A-3 913 615, a valve for a fluid filter is formed of a minimum of components and is fabricated by the bending of a plurality of struts into a spring housing which then is secured in an annular support by means of a turned-in edge. The necessary spring and poppet are assembled into the housing prior to being secured in the support and the poppet is guided in its movement at its periphery by the four struts forming the housing. While this is an economical design, the entire assembly is not readily removable or replaceable in a filter housing, but rather is designed to be secured in place by staking or a similar operation, and further the spring and valve poppet are permanently retained in the assembly and cannot be interchanged.

Another valve construction which is designed for convenient repair or replacement purposes is shown in Patent Specification US-A-1 602 372. This valve is designed for use in pumps and comprises a valve base which may be connected in any convenient manner to a pump structure and which includes a rearwardly extending spider having three equally spaced arms which terminate in an end hub and form the spring and poppet housing. In this arrangement replacement of the spring and/or poppet is effected by unthreading the spider from its base whereupon a central bolt can be disengaged from a nut to release the components of the assembly. While this valve construction provides interchangeability of components, it involves a relatively large number of elements which require manual assembly prior to placement in a filter housing.

A still further variation is shown in Patent Specification US-A-4 272 368. This valve is also of simplified construction, is particularly suited for placement in a filter housing and comprises a structure having a central support member with poppet and spring slidably received thereon and secured by a lock member. The valve is reversible in assembly to provide variations in the opening characteristics thereof, and is limited to some extent by the restriction to flow effected by the central support structure. Further, this valve configuration requires a relatively high number of components and is not particularly suited to ready replacement or interchange of components.

Patent Specification US-A-2 366 004 describes a discharge valve assembly for a fluid compressor which facilitates ease of assembly or replacement. The assembly includes a valve chamber having a conical valve seat and a cylindrical valve portion of a valve carrier extending into the chamber. The portion terminates in a bevelled valve stop surface with a pair of parallel lugs. A frusto-conical element has its greatest diameter substantially the same as the diameter of the valve chamber and has lateral slots which receive the parallel lugs. The valve element can be guided by the lugs and restrained by pins on the ends of the lugs. This assembly needs the detachable pins in order to permit replacement of the frusto-conical valve element.

In Patent Specification US-A-3 058 486 a check valve has a seat member sealable by a disc valve slidably restrained in a cage member by a valve spring. The cage member is shaped generally as two cylindrical sections of different diameters connected by an angular portion which acts as a stop to the disc valve.

According to one aspect of the invention as defined by the features of claim 1 there is provided a by-pass valve for a fluid filter comprising:
a valve body having an integral annular valve head and a spring retainer integral therewith and to be mounted in a fluid conduit to control fluid flow through the valve head;
an annular valve seat in the valve head cooperating with a valve poppet;
a poppet guide integral with the valve body, cooperating with guide means of the valve poppet and disposed between the valve seat and the spring retainer, a spring disposed between the valve poppet and the spring retainer to urge the valve poppet into engagement with the valve seat,
characterised in that;
the valve body is a one-piece valve body;
the poppet guide comprises a pair of spaced legs diametrically opposed and extending rearwardly of the valve head, the guide means of the valve poppet supporting the poppet slidably on said pair of legs for movement into and out of engagement with the valve seat;
the spring retainer comprises a further pair of legs extending from said pair of legs and terminating in an end wall engageable by one end of the spring, the legs of the further pair of legs being spaced closer together than the legs of said pair of legs; and
a poppet stop is provided between the two pairs of legs.

Such a valve can be of simplified unitary construction especially suited for assembly and removal from a filter for maintenance purposes or for a change of operating characteristics.

The valve body is designed so that the poppet and the spring can be assembled simply by inserting the valve poppet into the spring housing and pivoting same to a position co-operative with the valve seat. The bias spring is then be inserted between the poppet and end wall of the spring housing to urge the poppet into engagement with the valve seat. The valve body is formed as a moulded part, preferably an injection moulded part, with the valve seat integral therein and not requiring additional machining. The valve body preferably includes external threads thereon to facilitate assembly and disassembly from a valve housing. Still further, the valve body and the valve poppet may be commonly moulded from the same material, preferably glass-filled nylon, to provide a good seal between the valve seat and poppet and compatibility for a wide range of fluids.

The valve of the instant invention is advantageous in that it requires no fasteners or special assembly operations to hold the valve components together. Being a cartridge assembly, it can be readily installed into a threaded bore in a valve housing, and with the valve body formed of a plastics material, no additional components are required to achieve sealing with the valve housing. Still further, because of the minimum number of components in the valve design and the simplified form of assembly thereof, extremely low labour and material costs can be achieved in this design with production possible on a high volume basis.

According to another aspect of the invention as defined by the features of claim 5 there is provided a poppet valve assembly comprising:
a moulded plastics valve body having an annular valve head and a valve seat and an integral spring housing extending rearwardly of the valve head, the spring housing comprising upper and lower spaced parallel legs terminating in an end wall at the rearward end and forming an opening with the valve head; a valve poppet insertable through the opening and tiltable to a position in engagement with the valve seat; guide means on the valve poppet slidably to support the valve poppet on the upper spaced parallel legs forming a guide portion for restricted movement toward and away from the valve seat; and a spring disposed between the valve poppet and the end wall to bias the valve poppet toward the valve seat; the lower spaced legs of the spring housing are relatively closer spaced than said upper spaced legs and form a spring retainer portion adjacent the end wall, and a poppet stop section between the guide and retainer portions restricts movement of the valve poppet.

The invention is diagrammatically illustrated by way of example in the accompanying drawings, in which:-
Figure 1 is a sectional view through a typical valve housing including a by-pass valve according to the invention threaded in place in an internal bore of the housing;
Figure 2 is a plan view of the by-pass valve of Figure 1;
Figures 3,4 and 5 are respectively plan and elevational views of a valve body and a valve poppet of the by-pass valve of Figures 1 to 5 shown in various stages of assembly with respect to one another;
Figure 9 is a sectional view taken on line 9-9 of Figure 6;
Figure 10 is a sectional view taken on line 10-10 of Figure 6; and
Figure 11 is a sectional view taken on line 11-11 of Figure 6.

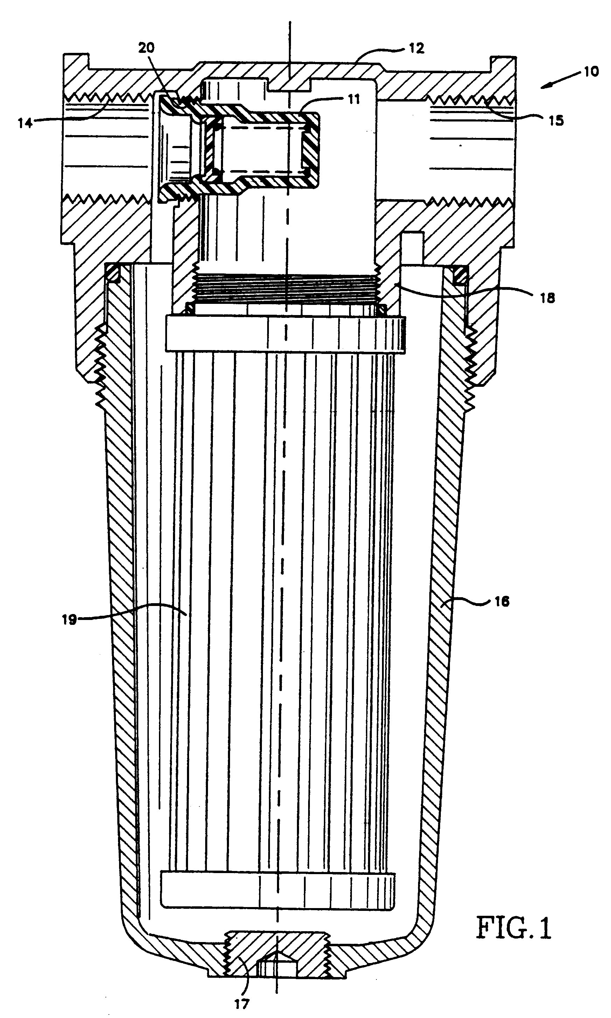

Referring to the drawings, there is shown in Figure 1 a cross-section of a typical filter housing 10 with a by-pass valve 11 contained therein. The filter housing 10 may be typically an aluminium die casting comprising a filter head 12 having an inlet port 14 and an outlet port 15 and threadably receiving at the lower portion thereof an element bowl 16 having a drain plug 17 at the lowermost portion thereof. The filter head 12 includes a cylindrical element support structure 18 in the form of an internally threaded boss which can receive a filter element 19. The element support 18 includes a transverse threaded bore 20 in which the by-pass valve 11 is received to place the by-pass valve 11 in the fluid flow path between the inlet and outlet ports 14, 15. Typically, fluid is routed from the inlet port 14 about the periphery of the filter element 19 to the interior thereof and through the middle of the element support 18 to the outlet port 15. In the event of contamination of the filter element 19 and a resulting higher differential pressure between the inlet and outlet ports 14, 15, the by-pass valve 11 will be opened to route fluid flow directly to the outlet port 15. It will be noted that in the illustrated embodiment the threaded bore 20 of the element support 18 is aligned with the inlet port 14 and is of a slightly smaller diameter so that the bypass valve 11 may be inserted through or removed form the inlet port 14 as will be more clearly described hereafter.

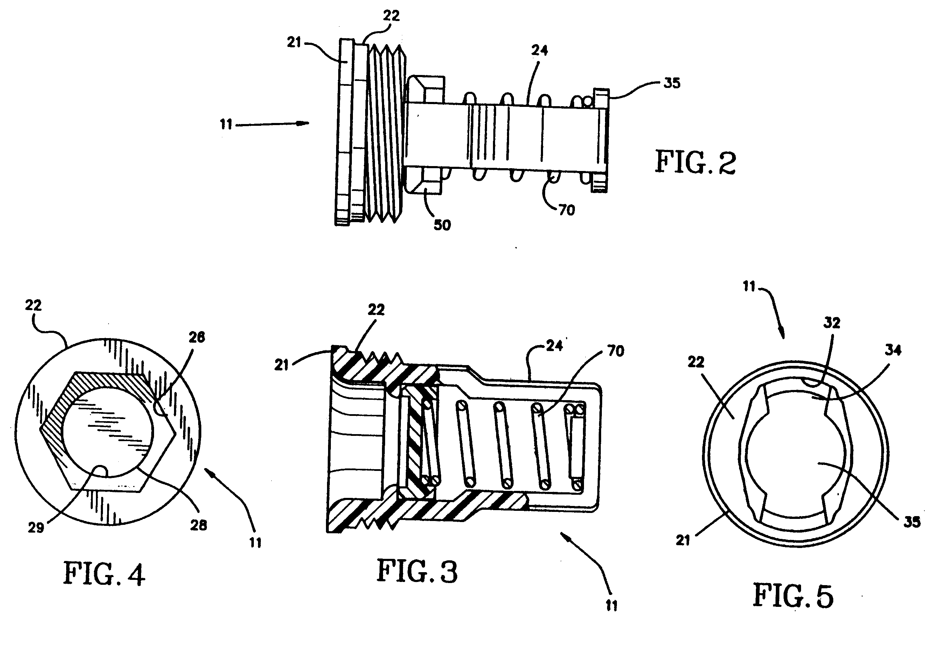

Referring to the remaining Figures, the by-pass valve 11 is shown in more detail as an integrally formed injection moulded plastics body member 21 comprising an annular valve head 22 and a spring housing 24. The valve head 22 is generally cylindrical in configuration having a bore 26 therein with a valve head 22. The valve seat 28 is an integral annular shoulder having a flat seating surface at the rearward side thereof and may be smoothly contoured at the forward portion thereof to facilitate fluid flow therethrough. As best seen in Figure 4, the entry part of the bore 26 of the valve head 22 is hexagonal in configuration and can receive the end of an allen wrench for assembly of the by-pass valve 11 in the bore 20 of a filter housing 10 such as that shown in Figure 1. The valve seat 28 thus forms a central circular opening 29 so that fluid can flow through the centre of the valve head 22 in a relatively unrestricted manner.

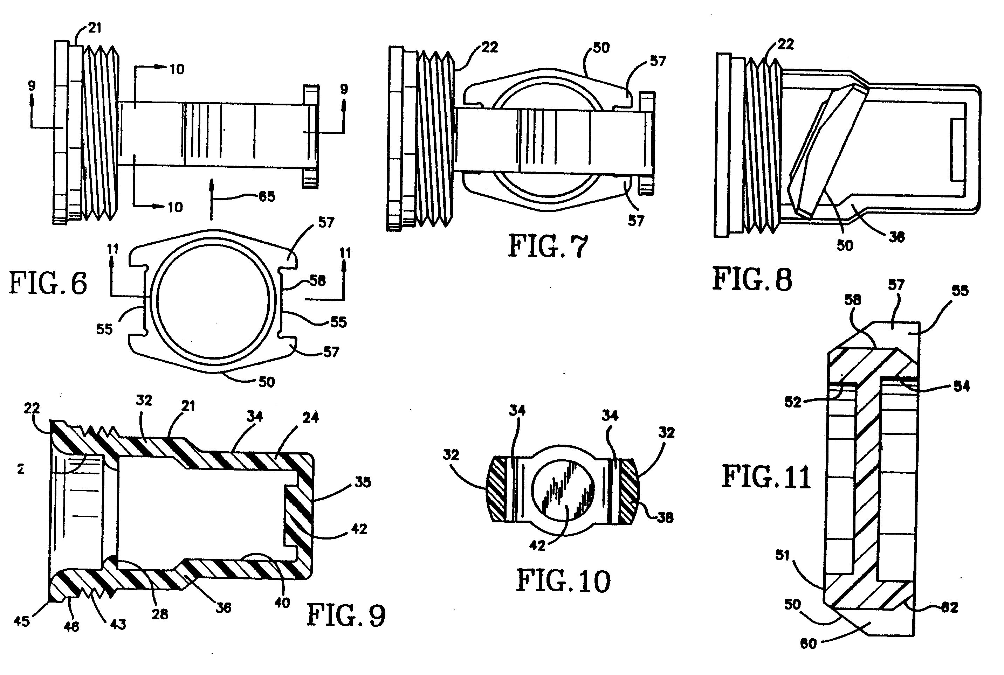

As best seen in Figure 9, the spring housing 24 comprises a first pair of diametrically opposed substantially parallel legs 32 extending rearwardly from the valve head 22, and a second pair of diametrically opposed substantially parallel legs 34, coextensive with the extending rearwardly of the first pair of legs 32 and terminating in an end wall 35. A short angled section 36 interconnects the first and second pairs of legs 32, 34. As best seen in the sectional view of Figure 10, each of the legs 32, 34 is substantially rectangular in cross-section, having a slightly curved outer peripheral surface 38 to facilitate placement of the by-pass valve assembly 11 in a threaded opening. Together with the annular valve head 22, the spring housing 24 forms a generally rectangular opening 40 which serves as a window which receives internal components of the bypass valve 11 as described below. The end wall 35 includes a raised boss 42 thereon, which serves as a seat and spring retainer.

The annular valve head 22 further includes threads 43 at its external periphery at an axial location adjacent the valve seat 28 which serve for threaded engagement of the by-pass valve 11 in a threaded opening such as the bore 20 of the filter housing 10. Still further, the annular head 22 includes a lip 45 at its forward end which can serve as a seal and as a stop for locating the bypass valve 11 in a threaded bore. A preferably cylindrical land 46 is included between the lip 45 and the threads 43 to serve as a means for sealing engagement with a threaded bore. Since the valve body 21 is formed entirely of a plastics material the threads of the bore 20 can be made to penetrate the land 46 to effect the seal. It will be noted that the window opening 40 in the body member 21 is greater in rearward dimension, that is between the annular head 22 and the end wall 35, than it is in transverse dimension, which is that distance between opposed pairs of the legs 32, 34.

Referring more particularly to the plan and sectional views of Figure 6 and Figure 11 respectively, a valve poppet 50 is formed with a generally rectangular body member having a transverse, circular, slightly bevelled valve surface 51 thereon, sized to mate with and seal against the valve seat 28, when positioned adjacent thereto. The valve poppet 50 includes a blind bore 52 at one face thereof within the poppet valve surface 51 which serves merely for clearance purposes and to reduce the overall cross-section of the body of the poppet 50 so that it is sufficiently resilient to ensure conformity and proper seating with the valve seat 28. The rearward surface of the poppet 50 also includes a blind bore 54 which serves a spring retainer function.

On its periphery, the valve poppet 50 includes a pair of diametrically opposite notches 55 which are generally of rectangular configuration opening outwardly of the valve poppet 50 in opposite directions. Each of the notches 55 is formed by a pair of parallel linearly extending arms 57 and an intermediate transverse wall 58 thereby forming a groove extending for substantially the entire thickness of the valve poppet 50. As best seen in Figure 11, the arms 57 include a bevel 60 at their forward ends, and a bevel 62 is provided at the rearward end of each of transverse end walls 58 for clearance purposes, as will be described in greater detail hereafter.

Figures 6,7 and 8 show how the poppet 50 is dimensioned and assembled relative to the valve body member 21. The opening 40 in the body member 21 is sized so as freely to receive the valve poppet 50, which is insertable therein transversely in the direction indicated by arrow 65 in Figure 6. That is, the overall linear dimension of the valve poppet 50 to the ends of the diametrically opposite arms 57 is slightly less than the dimension of the valve head 22 and the boss 42 on the end wall 35 so that the poppet 50 may be placed within the opening 40 in the position depicted in Figure 7. Also as seen in Figure 7, the distance between the arms of each pair of arms 57, forming the width of the respective notch 55, is slightly larger than the width of the legs 32 so as to provide a guided but relatively free slip-fit therein. The legs 32,34 and the angled sections 36 have a transverse dimension slightly grater than one-half the diameter of the poppet valve surface 51 while the overall length of body member 21 may be on the order of 25.4 mm (1.0 inch) in a preferred embodiment. In such embodiment the diameter of valve surface 51 is on the order of 11.4 mm (0.45 inch).

As seen in Figure 8, the poppet 50 may then be pivoted about a transverse axis to a position where eventually the poppet valve surface 51 will be in engagement with the valve seat 28. However, in the intermediate position depicted in Figure 8, it will be seen that the bevels 60, 62 allow sufficient clearance between the legs, particularly at the angled sections 36 for the poppet 50 to be moved to a transverse orientation. In such orientation, it will be apparent that the transverse walls 58 forming the notches 55 will be spaced to a dimension slightly less than the spacing between the first pair of legs 32 so that poppet 50 will be guided by and relatively freely slidable on the legs 32 toward and away from the valve seat 28. It will be apparent with this dimensioning that as the poppet 50 is moved rearwardly from the valve seat 28 in a guided nonpivotal movement, that eventually the angled sections 36 will be engaged to prevent further rearward movement of the poppet 50. Thus, it will be apparent that the first legs 32 form poppet guide surfaces for the poppet 50 and guide its movement toward and away from the valve seat 28.

With reference to Figures 2 and 3, a compression spring 70 can be compressed and placed in position between the poppet 50 and the end wall 35 with one end of the spring 70 received in the blind bore 54 in the poppet 50, and the other end disposed about the boss 42 on the end wall 35 form a spring retainer for the compression spring 70 and serve to retain the spring within the valve body member 21. Further, it will be clear that the poppet 50 may be readily removed from the body member 21 simply by compression of the spring 70 and lateral removal through the opening 40 of the body member 21, whereafter the poppet 50 may be pivoted to a longitudinal orientation as shown in Figure 7 and removed as well. Further, it will be clear that merely by substituting different forms of springs 70, varying degrees of spring rate and closure forces for the poppet 50 can be achieved in a relatively easy manner. While it is preferable that the body member 21 and the valve poppet 50 be formed of plastics and preferably of glass-filled nylon material, it is apparent that different materials may be utilized in this regard and obtain similar results. The advantages of glass-filled nylon include that a relatively smooth sealing surface can be achieved at the valve seat 28 and the poppet valve surface 51, requiring no additional machining as well as a great degree of compatibility with the many different types of fluids which might be encountered with valves of this kind.

## Claims

1. A by-pass valve (11) for a fluid filter comprising:
a valve body (21) having an integral annular valve head (22) and a spring retainer (34,35) integral therewith and to be mounted in a fluid conduit (20) to control fluid flow through the valve head (22);
an annular valve seat (28) in the valve head (22) cooperating with a valve poppet (50);
a poppet guide integral with the valve body (21), cooperating with guide means (55,57,58) of the valve poppet and disposed between the valve seat (28) and the spring retainer (34,35), and a spring (70) disposed between the valve poppet (50) and the spring retainer (34,35) to urge the valve poppet (50) into engagement with the valve seat (28);
characterised in that;
the valve body (21) is a one-piece valve body;
the poppet guide comprises a pair of spaced legs (32) diametrically opposed and extending rearwardly of the valve head (22), the guide means (55,57,58) of the valve poppet (50) supporting the poppet (50) slidably on said pair of legs (32) for movement into and out of engagement with the valve seat (28);
the spring retainer comprises a further pair of legs (34) extending from said pair of legs (32) and terminating in an end wall (35) engageable by one end of the spring (70), the legs of the further pair of legs (34) being spaced closer together than the legs of said pair of legs (32); and
a poppet stop (36) is provided between the two pairs of legs (32,34).

2. A by-pass valve according to claim 1, wherein the poppet stop comprises angled sections respectively interconnecting a leg of said pair of legs (32) to a leg of the further pair of legs (34).

3. A by-pass valve according to claim 1 or claim 2, wherein the valve body (21) and the valve poppet (50) are moulded plastics components.

4. A by-pass valve according to claim 3, wherein the valve body (21) and the valve poppet (50) are formed of glass-filled nylon.

5. A poppet valve assembly comprising:
a moulded plastics valve body (21) having an annular valve head (22) and a valve seat (28) and an integral spring housing (24) extending rearwardly of the valve head (22), the spring housing (24) comprising upper and lower spaced parallel legs (32,34) terminating in an end wall (35) at the rearward end and forming an opening (40) with the valve head (22); a valve poppet (50) insertable through the opening (40) and tiltable to a position in engagement with the valve seat (28); guide means (55, 57, 58) on the valve poppet (50) slidably to support the valve poppet (50) on the upper spaced parallel legs (32) forming a guide portion for restricted movement toward and away from the valve seat (28); and a spring (70) disposed between the valve poppet (50) and the end wall (35) to bias the valve poppet (50) toward the valve seat (28); wherein the lower spaced legs (34) of the spring housing (24) are relatively closer spaced than said upper spaced legs (32) and form a spring retainer portion adjacent the end wall (35), and a poppet stop section (36) between the guide and retainer portions restricts movement of the valve poppet (50).

6. A poppet valve assembly according to claim 5, wherein the valve poppet (50) is a moulded plastics component.

7. A poppet valve assembly according to claim 6, wherein the moulded plastics body (21) and the valve poppet (50) are formed of glass filled nylon.

8. A poppet valve assembly according to any one of claims 5 to 7, wherein the poppet stop section includes nonparallel angled sections (36) between said upper and lower parallel legs; the parallel legs (32,34), the angled sections (36) and the end wall (35) forming a generally rectangular opening (40) in the body having a larger rearward than transverse dimension;
the guide means on the valve poppet (50) comprises a pair of diametrically opposed notches (55) therein; and the poppet (50) has a linear dimension smaller than the rearward dimension of the opening (40) so as to be pivotable to a position intermediate the legs (32,34) for insertion and removal from the opening (40).

9. A poppet valve assembly according to claim 8, wherein the valve body (21) includes external threads (43) thereon for engagement in a threaded bore.

## Patentansprüche

1. Umgehungsventil (11) für einen Flüssigkeitsfilter, umfassend:
einen Ventilkörper (21), der einen einstückigen ringförmigen Ventilteller (22) und eine einstückig damit ausgebildete Federhaltevorrichtung (34, 35) aufweist und in einer Flüssigkeitsleitung (20) zu montieren ist, um den Durchfluß von Flüssigkeit durch den Ventilteller (22) zu steuern;
einen ringförmigen Ventilsitz (28) in dem Ventilteller (22), der mit einem Ventilkegel (50) zusammenwirkt;
eine mit dem Ventilkörper (21) einstückig ausgebildete Ventilkegelführung, die mit der Führungseinrichtung (55, 57, 58) des Ventilkegels zusammenwirkt und zwischen dem Ventilsitz (28) und der Federhaltevorrichtung (34, 35) angeordnet ist, und eine zwischen dem Ventilkegel (50) und der Federhaltevorrichtung (34, 35) angeordnete Feder (70), die den Ventilkegel (50) in Eingriff mit dem Ventilsitz (28) drückt;
dadurch gekennzeichnet, daß
der Ventilkörper (21) ein einstückiger Ventilkörper ist;
die Ventilkegelführung ein Paar beabstandeter Schenkel (32) aufweist, die einander diametral gegenüberliegen und hinter dem Ventilteller (22) verlaufen, wobei die Führungseinrichtung (55, 57, 58) des Ventilkegels (50) den Ventilkegel (50) verschiebbar auf dem Paar Schenkel (32) trägt, so daß er sich in und außer Eingriff mit dem Ventilsitz (28) bewegen kann;
die Federhaltevorrichtung ein weiteres Paar Schenkel (34) umfaßt, die von diesem Paar Schenkel (32) ausgehen und in einer Stirnwand (35) enden, in die ein Ende der Feder (70) eingreifen kann, wobei die Schenkel des weiteren Paares von Schenkeln (34) näher beieinander liegen als die Schenkel dieses Schenkelpaares (32); und daß
ein Ventilkegelanschlag (36) zwischen den beiden Paaren von Schenkeln (32, 34) vorgesehen ist.

2. Umgehungsventil nach Anspruch 1, dadurch gekennzeichnet, daß der Ventilkegelanschlag Winkelabschnitte aufweist, die jeweils einen Schenkel des Schenkelpaares (32) mit einem Schenkel eines weiteren Schenkelpaares (34) verbinden.

3. Umgehungsventil nach Anspruch 1 oder Anspruch 2, dadurch gekennzeichnet, daß der Ventilkörper (21) und der Ventilkegel (50) Formteile aus Kunststoff sind.

4. Umgehungsventil nach Anspruch 3, dadurch gekennzeichnet, daß der Ventilkörper (21) und der Ventilkegel (50) aus glasfasergefülltem Nylon bestehen.

5. Ventilkegelanordnung, umfassend:
einen Ventilkörper (21) aus geformtem Kunststoff mit einem ringförmigen Ventilteller (22) und einem Ventilsitz (28) und einem einstückigen Federgehäuse (24), das hinter dem Ventilteller (22) verläuft, wobei das Federgehäuse (24) obere und untere, voneinander beabstandete parallele Schenkel (32, 34) aufweist, die in einer Stirnwand (35) am rückwärtigen Ende enden und eine Öffnung (40) mit dem Ventilteller (22) bilden; einen Ventilkegel (50), der durch die Öffnung (40) einsetzbar ist und in eine Position in Eingriff mit dem Ventilsitz (28) gekippt werden kann; eine Führungseinrichtung (55, 57, 58) auf dem Ventilkegel (50), die den Ventilkegel (50) verschiebbar auf den oberen, voneinander beabstandeten parallelen Schenkeln (32) lagert, die einen Führungsabschnitt für eine begrenzte Bewegung in Richtung zu dem Ventilsitz (28) und von diesem weg bilden; und eine Feder (70), die zwischen dem Ventilkegel (50) und der Stirnwand (35) angeordnet ist, um den Ventilkegel (50) in Richtung zu dem Ventilsitz (28) vorzuspannen; dadurch gekennzeichnet, daß die unteren voneinander beabstandeten Schenkel (34) des Federgehäuses (24) relativ näher beieinanderliegen als die oberen voneinander beabstandeten Schenkel (32) und einen Federhalteabschnitt im Bereich der Stirnwand (35) bilden, und daß ein Ventilkegelanschlag (36) zwischen der Führungseinrichtung und der Haltevorrichtung die Bewegung des Ventilkegels (50) begrenzt.

6. Ventilkegelanordnung nach Anspruch 5, dadurch gekennzeichnet, daß der Ventilkegel (50) ein Formteil aus Kunststoff ist.

7. Ventilkegelanordnung nach Anspruch 6, dadurch gekennzeichnet, daß der geformte Kunststoffkörper (21) und der Ventilkegel (50) aus glasfasergefülltem Nylon bestehen.

8. Ventilkegelanordnung nach einem der Ansprüche 5 bis 7, dadurch gekennzeichnet, daß der Ventilkegelanschlag nichtparallele Winkelabschnitte (36) zwischen den oberen und unteren parallelen Schenkeln aufweist; wobei die parallelen Schenkel (32, 34), die Winkelabschnitte (36) und die Stirnwand (35) eine im allgemeinen rechteckige Öffnung (40) in dem Körper bilden, die in ihrer Abmessung nach hinten größer ist als in ihrer Querabmessung;
daß die Führungseinrichtung auf dem Ventilkegel (50) ein Paar diametral entgegengesetzter Kerben (55) aufweist; und daß die lineare Abmessung des Ventilkegels (50) kleiner ist als die rückwärtige Abmessung der Öffnung (40), so daß er in eine Position zwischen den Schenkein (32, 34) drehbar ist, um in die Öffnung (40) eingesetzt und aus dieser entfernt werden zu können.

9. Ventilkegelanordnung nach Anspruch 8, dadurch gekennzeichnet, daß der Ventilkörper (21) ein Außengewinde (43) aufweist, welches in eine Gewindebohrung eingreift.

## Revendications

1. Vanne de dérivation (11) pour filtre à fluide, comprenant :
- un corps de soupape (21) muni d'une tête de soupape annulaire intégrée (22) et d'un élément de retenue de ressort (34, 35) solidaire de la tête et devant se monter dans un conduit de fluide (20) pour commander le débit de fluide à travers la tête de soupape (22) ;
- un siège de soupape annulaire (28) placé dans la tête de soupape (22) pour coopérer avec une soupape soulevante (50) ;
- un guide de soupape intégré au corps de soupape (21), coopérant avec des moyens de guidage (55, 57, 58) de la soupape soulevante et disposé entre le siège de soupape (28) et l'élément de retenue de ressort (34, 35), ainsi qu'un ressort (70) monté entre la soupape soulevante (50) et l'élément de retenue de ressort (34, 35) pour pousser la soupape soulevante (50) en contact avec le siège de soupape (28) ;
vanne caractérisée en ce que :
- le corps de soupape (21) est un corps de soupape d'une seule pièce ;
- le guide de soupape comprend une paire de pieds espacés (32) diamétralement opposés et dirigés vers l'arrière de la tête de soupape (22), les moyens de guidage (55, 57, 58) de la soupape soulevante (50) supportant cette soupape (50) en glissement sur la paire de pieds (32) de façon qu'elle se déplace pour venir en contact et s'écarter du contact avec le siège de soupape (28) ;
- l'élément de retenue de ressort comprend une autre paire de pieds (34) partant de la première paire de pieds (32) et se terminant par une paroi d'extrémité (35) s'engageant contre une extrémité du ressort (70), les pieds de l'autre paire de pieds (34) étant plus rapprochés que les pieds de la première paire de pieds (32) ; et
- une butée de soupape (36) est formée entre les deux paires de pieds (32, 34).

2. Vanne de dérivation selon la revendication 1, caractérisée en ce que la butée de soupape est constituée par des parties inclinées reliant respectivement un pied de la paire de pieds (32) à un pied de l'autre paire de pieds (34).

3. Vanne selon l'une quelconque des revendications 1 et 2, caractérisée en ce que le corps de soupape (21) et la soupape soulevante (50) sont des éléments moulés en matière plastique.

4. Vanne de dérivation selon la revendication 3, caractérisée en ce que le corps de soupape (21) et la soupape soulevante (50) sont réalisés en nylon chargé de verre.

5. Dispositif de soupape soulevante comprenant :
- un corps de soupape en matière plastique moulée (21) comportant une tête de soupape annulaire (22) et un siège de soupape (28), ainsi qu'un carter de ressort intégré (24) partant vers l'arrière de la tête de soupape (22), le carter de soupape (24) comprenant des pieds supérieurs et des pieds inférieurs espacés parallèles (32, 34) se terminant par une paroi d'extrémité (35) à leur extrémité arrière et formant une ouverture (40) avec la tête de soupape (22) ; une soupape soulevante (50) qu'on peut introduire par l'ouverture (40) et faire basculer pour l'amener dans une position en contact avec le siège de soupape (28) ; des moyens de guidage (55, 57, 58) placés sur la soupape soulevante (50) pour supporter en glissement cette soupape soulevante (50) sur les pieds supérieurs espacés parallèles (32) formant une partie de guidage pour permettre un mouvement limité de rapprochement et d'écartement par rapport au siège de soupape (28) ; et un ressort (70) monté entre la soupape soulevante (50) et la paroi d'extrémité (35) pour pousser la soupape soulevante (50) vers le siège de soupape (28) ; dispositif de soupape soulevante caractérisé en ce que les pieds inférieurs espacés (34) du carter de ressort (24) sont relativement plus rapprochés que les pieds supérieurs espacés (32) et forment une partie de retenue de ressort au voisinage de la paroi d'extrémité (35), et en ce qu'une partie de butée de soupape soulevante (36) située entre les parties de guidage et de retenue, limite le mouvement de la soupape soulevante (50).

6. Dispositif de soupape soulevante selon la revendication 5, caractérisé en ce que la soupape soulevante (50) est un élément en matière plastique moulée.

7. Dispositif de soupape soulevante selon la revendication 6, caractérisé en ce que le corps de matière plastique moulé (21) et la soupape soulevante (50) sont réalisés en nylon chargé de verre.

8. Dispositif de soupape soulevante selon l'une quelconque des revendications 5 à 7, caractérisé en ce que la partie de butée de soupape soulevante comprend des parties inclinées non parallèles (36) situées entre les pieds supérieurs et les pieds inférieurs parallèles ; en ce que les pieds parallèles (32, 34), les parties inclinées (36) et la paroi d'extrémité (35) forment, dans le corps, une ouverture généralement rectangulaire (40) présentant une direction vers l'arrière supérieure à la dimension transversale ; en ce que les moyens de guidage formés sur la soupape soulevante (50) comprennent une paire d'encoches diamétralement opposées (55) dans celle-ci ; et en ce que la soupape soulevante (50) présente une dimension linéaire inférieure à la dimension vers l'arrière de l'ouverture (40), pour pouvoir pivoter dans une position intermédiaire entre les pieds (32, 34), de façon qu'on puisse l'introduire et la retirer par l'ouverture (40).

9. Dispositif de soupape soulevante selon la revendication 8, caractérisé en ce que le corps de soupape (21) comporte sur celui-ci un pas de vis extérieur (43) destiné à se visser dans un alésage fileté.
